# EUROPÄISCHE PATENTANMELDUNG

(11) **EP 3 647 614 A1**
(43) Veröffentlichungstag der Anmeldung: **06.05.2020**
(21) Anmeldenummer: 19195834.7
(22) Anmeldetag: 06.09.2019
(51) Int. Cl.: F16C 29/02, F16C 32/06, F16C 33/10

(54) **LINEARVORSCHUBEINRICHTUNG UND EINE DAMIT AUSGERÜSTETE OBJEKTBEARBEITUNGSEINRICHTUNG**

(30) Priorität: 29.10.2018 DE 102018218482
(71) Anmelder: Otto Bihler Handels-Beteiligungs-GmbH, 87642 Halblech (DE)
(72) Erfinder: HENGGE, Kilian, 87675 Stötten (DE)
(74) Vertreter: Weickmann & Weickmann PartmbB

(57) **Zusammenfassung**

Die Erfindung betrifft eine Linearvorschubeinrichtung mit einem Gehäuse (1), einem darin in einem hydrostatischen Lager gelagerten Vorschubelement (3), welches mittels einer Antriebsvorrichtung (19) längs einer Vorschubachse (4) geführt vor- und zurückbewegbar - und dazu mittels einer Antriebsvorrichtung mehr oder weniger weit aus dem Gehäuse (1) ausfahrbar bzw. in das Gehäuse (1) einfahrbar ist. Das hydrostatische Lager ist mit einer in dem Gehäuse (1) vorgesehenen, dem Außenumfang des Vorschubelementes (3) gegenüberliegenden Gegenlauffläche ausgestaltet und hat zwei in Längsrichtung des Vorschubelements (3) hintereinander angeordnete hydrostatische Lagerstellen, wobei jede hydrostatische Lagerstelle eine Anzahl von Schmiermitteltaschen aufweist, die um den Umfang des Vorschubelementes (3) herum verteilt in der Gegenlauffläche (2) ausgebildet sind und über Schmiermittelkanäle mit unter Druck stehendem Schmiermittel zu versorgen sind.

## Beschreibung

Objektbearbeitungseinrichtungen mit Linearvorschubeinrichtungen der hier betrachteten Art sind in vielfachen Ausgestaltungen insbesondere als Werkzeugmaschinen zum Bearbeiten von Werkstücken bekannt. Zum Stand der Technik kann beispielsweise auf die EP 1 016 475 A2 verwiesen werden, aus der eine Objektbearbeitungseinrichtung mit einer Linearvorschubeinrichtung bekannt ist. Die Linearvorschubeinrichtung umfasst einen kreiszylindrischen Rohrkörper als Vorschubelement, welches in einem Gehäuse gelagert ist, so dass es längs einer Vorschubachse geführt - vor- und zurückbewegbar - und dabei mehr oder weniger weit aus dem Gehäuse ausfahrbar bzw. in das Gehäuse einfahrbar ist. Das rohrförmige Vorschubelement weist eine radial äußere kreiszylindrische Führungsfläche auf. In dem Gehäuse ist ein Führungskanal mit einer entsprechend komplementären Führungsfläche für das Vorschubelement vorgesehen. Zur Bewegung des Vorschubelementes ist ein von einem steuerbaren Elektromotor angetriebener Kugelgewindetrieb mit einer in dem Rohrkörper angeordneten, auf einer Gewindespindel sitzenden Spindelmutter vorgesehen. Durch entsprechende Ansteuerung des Elektromotors kann über den Kugelgewindetrieb erreicht werden, dass das unverdrehbar gelagerte Vorschubelement eine Vorschubbewegung bzw. Rückzugbewegung in Bezug auf das Gehäuse ausführt.

Zur Schmierung bewegter Teile der bekannten Objektbearbeitungseinrichtung kann dessen Linearvorschubeinrichtung mit einem Schmiernippel-Anschluss versehen sein, der über Schmiermittelwege mit dem jeweiligen Eingriffsbereich zwischen der Außenumfangsfläche des Rohrkörpers und der Führungsfläche des Führungskanals verbunden ist. Im Dauerbetrieb kann der Schmiernippel an ein Schmiermittelversorgungssystem angeschlossen sein, um regelmäßig für ausreichende Schmiermittelzufuhr zu sorgen.

Beim Auftreten von hohen Querkräften auf das Vorschubelement und insbesondere bei zusätzlich schnellem Reversierbetrieb kann es bei Objektbearbeitungseinrichtungen solcher Art zur Beschädigung von Gleitflächen kommen. Die Führung ist spielbehaftet.

Der vorliegenden Erfindung liegt die Aufgabe zugrunde, eine Linearvorschubeinrichtung bereitzustellen, welche zur Erzeugung von hohen Vorschubkräften geeignet ist, wie sie etwa zum Stanzen, Biegen und/oder Prägen von Objekten, insbesondere metallischen Werkstücken, erforderlich sind, wobei die Führung und Lagerung des Vorschubelementes weitgehend spielfrei und verschleißfrei sowie mit geringer Reibung bei guter Dämpfung erfolgt.

Zur Lösung dieser Aufgabe wird eine Linearvorschubeinrichtung gemäß Anspruch 1 sowie eine Linearvorschubeinrichtung gemäß Anspruch 6 und eine mit einer betreffenden Linearvorschubeinrichtung ausgestattete Objektbearbeitungseinrichtung zum Bearbeiten von Objekten vorgeschlagen. Vorteilhafte Weiterbildungen der Linearvorschubeinrichtung sind in der folgenden Beschreibung und in den Unteransprüchen dargelegt.

Ein übergeordneter Aspekt der Erfindung in deren Ausgestaltungen ist, dass die Lageranordnung zur Lagerung und zur Führung des Vorschubelementes als hydrostatisches Lager mit wenigstens zwei in Längsrichtung des Vorschubelementes hintereinander angeordneten hydrostatischen Lagerstellen ausgebildet ist, deren jede eine Anzahl von Schmiermitteltaschen aufweist, die um den Umfang des Vorschubelementes herum verteilt sind. Die Schmiermitteltaschen sind über Schmiermittelkanäle, die in dem Gehäuse verlaufen und in die Schmiermitteltaschen münden, mit unter Druck stehendem Schmiermittel einer Schmiermittelquelle zu versorgen. Als Schmiermittel kommt vorzugsweise Öl in Frage. Bei einer Linearvorschubeinrichtung nach Anspruch 1 sind alle Schmiermitteltaschen als Vertiefungen in dem Führungskanal, also der Gegenlauffläche, ausgebildet. Bei einer Linearvorschubeinrichtung nach Anspruch 6 sind die Schmiermitteltaschen einer ersten hydrostatischen Lagerstelle als Vertiefungen im Vorschubelement an dessen Umfang ausgebildet und in der Nähe von dem axial hinteren Ende des Vorschubelementes vorgesehen, wohingegen die Schmiermitteltaschen einer zweiten hydrostatischen Lagerstelle in der Nähe der Gehäuseöffnung und in Umfangsrichtung des Vorschubelementes verteilt als Vertiefungen in dem Führungskanal, also in der Gegenlauffläche ausgebildet sind.

Sowohl für die Linearvorschubeinrichtung gemäß Anspruch 1 und deren Weiterbildungen als auch für die Linearvorschubeinrichtung nach Anspruch 6 und deren Weiterbildungen gilt, dass durch die in Längsrichtung des Vorschubelementes hintereinander angeordneten hydrostatischen Lagerstellen sowohl Radialkräfte als auch durch auf das Vorschubelement wirkende Querkräfte erzeugte Drehmomente wirksam aufgenommen werden. Dies erlaubt es beispielsweise, Biegestempel ohne zusätzliche Führung auf dem Vorschubelement vorzusehen und zu Biegeprozessen zu betreiben sowie erzeugte Prozesskräfte, wie auch Schläge, spielfrei bei sehr guter Dämpfung aufzunehmen.

Jede Lagerstelle sollte mit mindestens vier um den Umfang des Vorschubelementes herum möglichst gleichmäßig verteilten Schmiermitteltaschen ausgeführt sein, die über in dem Gehäuse integrierte Schmiermittelkanäle mit Schmiermittel unter Druck versorgt werden. Notwendige Druckregler können im Gehäuse versenkt montiert sein. Die Versorgung solcher Druckregler mit unter Druck stehendem Schmiermittel kann ebenfalls über im Gehäuse integrierte Bohrungen realisiert sein. Auf diese Weise ist nur eine Schmiermitteldruckleitung zum Gehäuse notwendig. Die Rückleitung des Schmiermittels kann z.B. über mehrere, über den Umfang der Lagerstellen verteilte Rückführnuten erfolgen.

Die Durchführung des länglichen Vorschubelementes nach außen ist durch eine Dichtungsanordnung gegen Austritt von Schmiermittel abgedichtet.

Als steuerbare Antriebsvorrichtungen kommen insbesondere ein von einem Servomotor angetriebener Planetenrollengewindetrieb oder ein hydrostatischer Gewindetrieb in Frage, die hohe Vorschubkräfte erzeugen können.

Bei der Ausgestaltung der Linearvorschubeinrichtung nach Anspruch 1 können die Schmiermitteltaschen einer Lagerstelle von den Schmiermitteltaschen einer betreffenden weiteren Lagerstelle einen unveränderten axialen Abstand haben.

Das maximale Drehmoment, das von der erfindungsgemäß realisierten Führung aufgenommen werden kann, hängt neben dem Druck in den Schmiermitteltaschen auch von dem axialen Abstand der beiden Lagerstellen zueinander ab.

Bei der Ausgestaltung der Erfindung gemäß Anspruch 6 und deren Weiterbildungen ist es vorteilhaft, die Schmiermitteltaschen der ersten hydrostatischen Lagerstelle ganz hinten auf dem Vorschubelement - und die Schmiermitteltasche der zweiten hydrostatischen Lagerstelle ganz vorne nahe der Gehäuseöffnung vorzusehen, so dass bei jeder Hublage des Vorschubelementes immer der maximal mögliche Abstand der beiden Lagerstellen zueinander genutzt werden kann. Die Schmiermitteltaschen der ersten hydrostatischen Lagerstelle sind also mitfahrend bei der Hubbewegung des Vorschubelementes.

Da die Zufuhr von Schmiermittel unter Druck nicht über bewegte Teile, wie etwa das Vorschubelement, sondern möglichst über das Gehäuse erfolgen sollte, ist es sinnvoll, die Schmiermitteltaschen beider Lagerstellen mit einer Mindestlänge auszugestalten, so dass sie in jeder Hublage mit Schmiermittel versorgt werden können.

Befindet sich das Vorschubelement in seiner zurückgezogenen hinteren Position in dem Gehäuse, so ist der Abstand zwischen den beiden hydrostatischen Lagerstellen bei der Ausgestaltung der Erfindung nach Anspruch 6 maximal. In dieser Position kann das größte Drehmoment von der Führung aufgenommen werden. Befindet sich das Vorschubelement in vorderster Position, so ist der Abstand zwischen den beiden hydrostatischen Lagerstellen minimal. In dieser Position ist das Drehmoment, das von der Führung aufgenommen werden kann, am geringsten.

Gegenstand der Erfindung ist auch eine Objektbearbeitungseinrichtung gemäß Anspruch 11 zum Bearbeiten von Objekten, durch einen Vorschubvorgang eines Objektbearbeitungswerkzeugs, wobei die Objektbearbeitungseinrichtung eine Linearvorschubeinrichtung nach der Erfindung aufweist und das Vorschubelement der Linearvorschubeinrichtung als Objektbearbeitungswerkzeugträger ausgebildet oder zur Verbindung mit einem Objektbearbeitungswerkzeugträger eingerichtet ist.

Nachstehend werden ein Ausführungsbeispiel der Linearvorschubeinrichtung nach Anspruch 1 sowie ein Ausführungsbeispiel der Linearvorschubeinrichtung nach Anspruch 6 unter Bezugnahme auf die Zeichnungen näher erläutert.

Die Figuren 1 - 5 betreffen ein Ausführungsbeispiel einer Linearvorschubeinrichtung gemäß Anspruch 1, wohingegen die Figuren 6 - 9 ein Ausführungsbeispiel der Linearvorschubeinrichtung gemäß Anspruch 6 zeigen.
- Figur 1: zeigt einen vorderen Bereich des ersten Ausführungsbeispiels im Längsschnitt durch das Gehäuse bei zurückgezogenem Vorschubelement,
- Figur 2: zeigt den vorderen Bereich der Linearvorschubeinrichtung im Längsschnitt durch das Gehäuse bei vorgeschobenem Vorschubelement,
- Figur 3: zeigt eine radial vergrößerte Darstellung der Ansicht gemäß Figur 1, jedoch ohne Vorschubelement,
- Figur 4: zeigt eine radial vergrößerte Darstellung der Ansicht gemäß Figur 1 mit im Längsschnitt gezeigtem Vorschubelement,
- Figur 5: zeigt eine Querschnittsansicht der Linearvorschubeinrichtung entsprechend der mit I - I in Figur 1 angedeuteten Schnittebene,
- Figur 6: zeigt den vorderen Bereich des zweiten Ausführungsbeispiels im Längsschnitt durch das Gehäuse mit zurückgezogenem Vorschubelement,
- Figur 7: zeigt den vorderen Bereich des zweiten Ausführungsbeispiels im Längsschnitt durch das Gehäuse mit vorgeschobenem Vorschubelement,
- Figur 8: zeigt eine Ansicht gemäß Figur 6, jedoch ohne Vorschubelement, und
- Figur 9: zeigt eine Längsschnittdarstellung des zweiten Ausführungsbeispiels ohne Vorschubelement jedoch mit einer gegenüber der Schnittebene der Figur 8 um die Längsachse verdrehten Schnittebene.

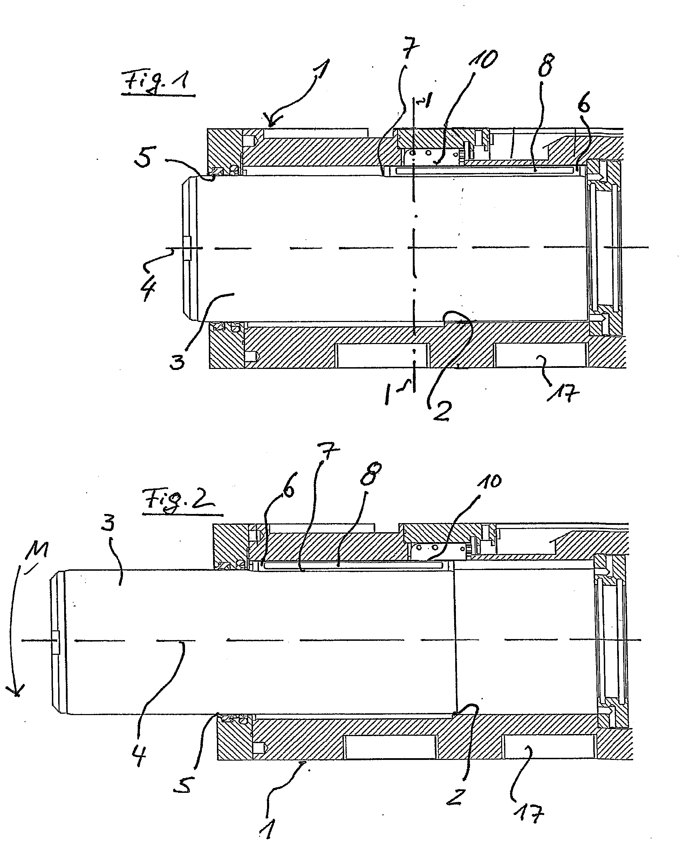

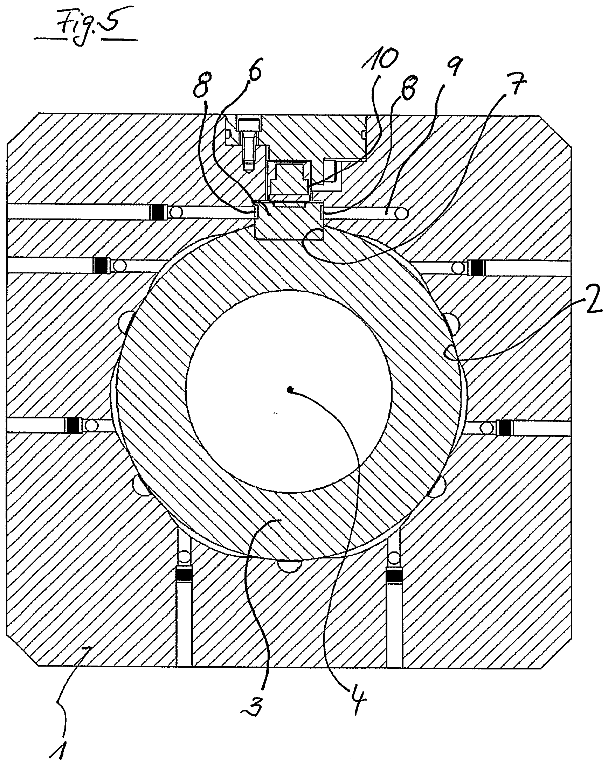

Das erste Ausführungsbeispiel wird im Folgenden unter Bezugnahme auf die Figuren 1 - 5 erläutert. Es weist ein in den Figuren teilweise dargestelltes längliches Gehäuse 1 mit einem im Wesentlichen aus Figur 5 ersehbaren äußeren Umriss auf. Das Gehäuse 1 bildet einen Führungszylinder mit einer Gegenlauffläche 2 zur Lagerung und Führung eines länglichen, im Querschnitt im Wesentlichen kreisrunden Vorschubelementes 3 bei dessen Bewegungen längs einer Vorschubachse 4 zwischen einer in das Gehäuse 1 zurückgezogenen Stellung gemäß Figur 1 und einer durch die Gehäuseöffnung 5 hindurch vorgeschobenen Stellung gemäß Figur 2.

Ein insbesondere in Figur 5 gut erkennbarer Nutstein 6 ist fest in einer Aufnahmenut 7 des Vorschubelementes 3 aufgenommen und durch eine hydrostatische Lagerung spielfrei vorgespannt in dem Gehäuse 1 parallel zu der Vorschubachse 4 geführt bewegbar. Schmiermitteltaschen 8 dieser hydrostatischen Lagerung sind in dem Nutstein 6 vorgesehen. Sie werden über Bohrungen 9 in der Gegenlauffläche des Gehäuses 1 mit Schmiermittel unter Druck versorgt. Der Nutstein 6 ist auf beiden Lateraseiten mit jeweils mindestens einer Schmiermitteltasche 8 ausgeführt.

Die Erfassung der Position des Vorschubelementes 3 kann durch ein auf dem Nutstein 6 angebrachtes absolutes Wegmesssystem 10 erfolgen.

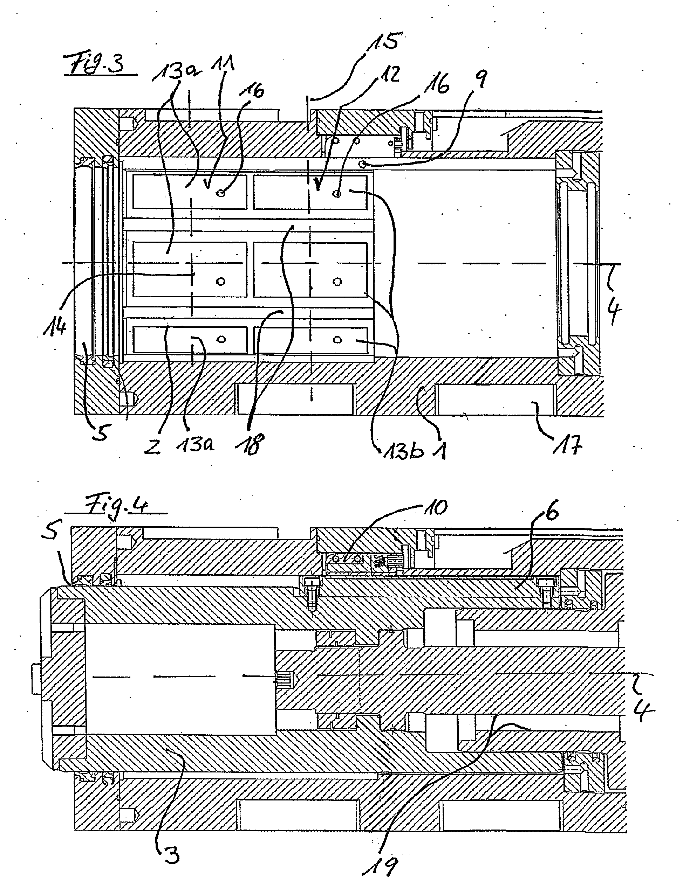

Die Lageranordnung zur Lagerung und Führung des Vorschubelementes 3 zur Bewegung längs der Vorschubachse 4 ist als hydrostatisches Lager mit der in dem Gehäuse 1 vorgesehenen, dem Außenumfang des Vorschubelementes 3 gegenüberliegenden Gegenlauffläche 2 eines Führungskanals ausgestaltet und hat zwei in Längsrichtung des Vorschubelementes 3 hintereinander angeordnete hydrostatische Lagerstellen 11, 12 (vgl. Figur 3). Jede der beiden hydrostatischen Lagerstellen 11, 12, weist eine Anzahl von Schmiermitteltaschen 13a bzw. 13b auf. In dem gezeigten Beispiel sind es jeweils sechs Schmiermitteltaschen 13a bzw. 13b pro hydrostatischer Lagerstelle 11, 12. Die Schmiermitteltaschen 13a bzw. 13b der jeweiligen Lagerstelle sind im Wesentlichen gleichmäßig am Umfang des die Gegenlauffläche 2 bildenden Führungskanals verteilt und auf einer jeweiligen Querschnittsebene 14, 15 zentriert angeordnet. Die im Wesentlichen gleich ausgebildeten konkav in die Gegenlauffläche 2 eingearbeiteten Schmiermitteltaschen 13a bzw. 13b haben in Draufsicht betrachtet bei dem gezeigten Ausführungsbeispiel eine rechteckige, in Richtung der Vorschubachse 4 längliche Form, (vgl. Figur 3) und sind so angeordnet, dass einer jeweiligen Schmiermitteltasche 13a der ersten hydrostatischen Lagerungsstelle 11 eine jeweilige Schmiermitteltasche 13b der zweiten hydrostatischen Lagerungsstelle 12 in axialer Richtung fluchtend benachbart ist.

Die beiden hydrostatischen Lagerstellen 11, 12 erstrecken sich über einen axialen Bereich der Führungszylindergegenlauffläche 2, welcher bei dem Maximalhub des Vorschubelementes 3 zwischen den Stellungen gemäß Figur 1 und Figur 2 stets von dem Außenumfang des Vorschubelementes 3 überlappt ist, so dass das Vorschubelement 3 stets durch beide hydrostatischen Lagerungsstellen 11, 12 hydrostatisch gelagert ist.

Die Schmiermitteltaschen 13 werden über im Gehäuse integrierte Bohrungen 16 mit Schmiermittel unter Druck von einer Schmiermitteldruckquelle versorgt. Als Schmiermittel kommt vorzugsweise Drucköl in Frage. Mit 17 sind notwendige Druckregler gekennzeichnet, die im Gehäuse 1 versenkt montiert sind. Die Versorgung der Druckregler 17 mit Schmiermittel unter Druck geschieht ebenfalls über in dem Gehäuse 1 integrierte Bohrungen. Dadurch ist nur eine Druckleitung für Schmiermittel zum Gehäuse 1 notwendig. Die Rückleitung des Schmiermittels erfolgt über mehrere, über den Umfang der Lagerstellen 11, 12 verteilte Rückführnuten 18, welche axial oder/und radial ausgelegt sein können.

An der Gehäuseöffnung 5 ist diese nach außen durch eine Dichtung gegen Austritt des Schmiermittels abgedichtet.

Das Vorschubelement 3 ist rohrartig ausgestaltet, wobei rückseitig Komponenten eines hydrostatischen Gewindetriebs 19 oder eines Rollengewindetriebs oder eines Kugelgewindetriebs (vgl. Figur 4) darin aufgenommen sind, welcher von einem steuerbaren Servomotor antreibbar ist, um eine hohe Vorschubkraft auf das Vorschubelement 3 auszuüben und dieses entsprechend zu bewegen.

Mit dem hier gezeigten Ausführungsbeispiel der Erfindung ist eine lineare Vorschubeinheit zum Stanzen, Biegen oder Prägen mit hoher Vorschubkraft realisierbar, wobei das Vorschubelement als Objektbearbeitungswerkzeugträger ausgebildet oder zur Verbindung mit einem solchen eingerichtet sein kann.

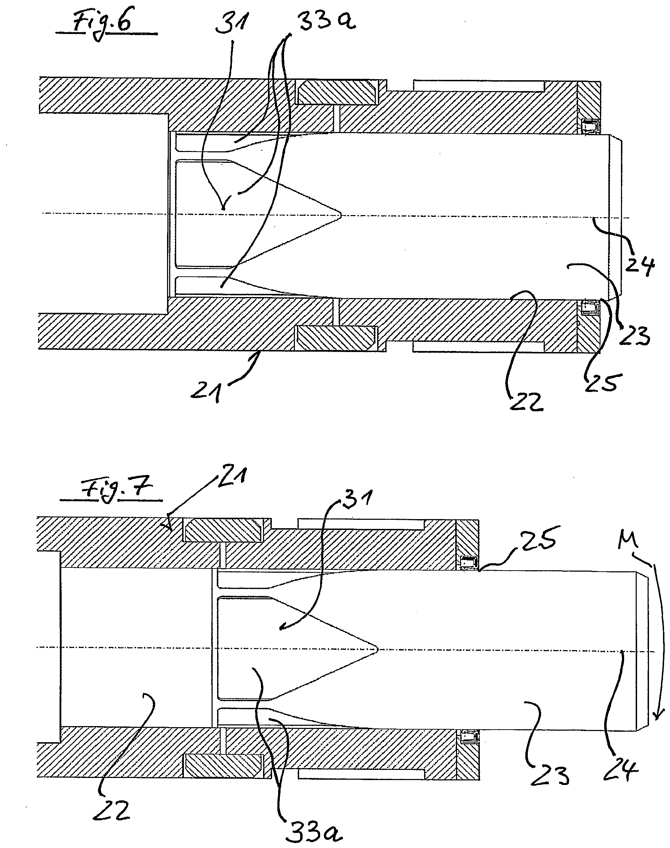

Unter Bezugnahme auf die Figuren 6 - 9 wird nachstehend ein Ausführungsbeispiel der Erfindung nach Anspruch 6 erläutert. Es weist ein in den Figuren teilweise dargestelltes längliches Gehäuse 21 mit einem äußeren Umriss auf, der im Wesentlichen dem Umriss des Gehäuses 1 des ersten Ausführungsbeispiels entspricht.

Das Gehäuse 21 bildet einen Führungszylinder mit einem Führungskanal entsprechend der Gegenlauffläche 22 zur Lagerung und Führung des länglichen, im Querschnitt runden Vorschubelementes 23 bei dessen Bewegungen längs der Vorschubachse 24 zwischen der in das Gehäuse 21 zurückgezogenen Stellung gemäß Figur 6 und der durch die Gehäuseöffnung 25 hindurch vorgeschobenen Stellung gemäß Figur 7. Das Vorschubelement 23 ist gegen der Drehung um die Vorschubachse 24 gesichert.

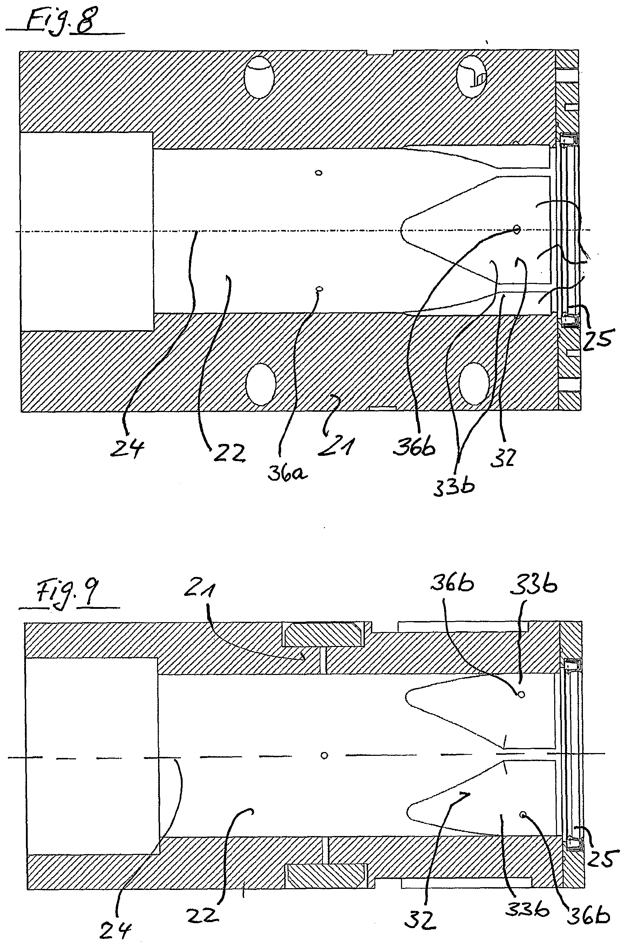

Die Lageranordnung zur Lagerung und Führung des Vorschubelementes 23 zur Bewegung längs der Vorschubachse 24 ist als hydrostatisches Lager mit der Gegenlauffläche 22 ausgestaltet. Die Lageranordnung umfasst eine erste hydrostatische Lagerstelle (vgl. 31 in Figur 6 und Figur 7) und eine zweite hydrostatische Lagerstelle (vgl. 32 in Figur 8 und Figur 9).

Die erste hydrostatische Lagerstelle 31 ist durch eine Gruppe von Schmiermitteltaschen 33a definiert, die am Umfang des Vorschubelementes 23 in diesem als Vertiefungen ausgebildet sind. Sie befinden sich in der Nähe des hinteren Endes des Vorschubelementes 23, haben im Wesentlichen gleiche Form und sind gleichmäßig am Umfang des Vorschubelementes 23 auf einer gemeinsamen Querschnittsebene liegend verteilt angeordnet.

Die zweite hydrostatische Lagerstelle 32 ist durch eine Gruppe von Schmiermitteltaschen 33b gekennzeichnet, die in der Gegenlauffläche 22 des Führungszylinders in dem Gehäuse 21 ausgebildet sind. Sie befinden sich nahe der vorderen Gehäuseöffnung 25, haben im Wesentlichen gleiche Form und sind über den Innenumfang des Führungskanals gleichmäßig verteilt angeordnet.

Bei den Vorschub- und Rückzugsbewegungen des Vorschubelementes 23 werden die Schmiermitteltaschen 33a der ersten hydrostatischen Lagerstelle 31 somit mitbewegt.

In Draufsicht betrachtet sind die Schmiermitteltaschen 33a von einer nahe dem hinteren Ende des Vorschubelementes 23 angeordneten Basis ausgehend mit zunehmendem axialen Abstand davon in Richtung zum vorderen Ende nach Art eines Keils verjüngt ausgebildet. Im Beispielsfall haben sie näherungsweise die Gestalt eines giebelhausförmigen Pentagons.

Eine ähnliche Gestalt haben die Schmiermitteltaschen 33b der zweiten hydrostatischen Lagerstelle 32, wobei diese in Draufsicht betrachtet von einer nahe der Gehäuseöffnung 25 angeordneten Basis ausgehend mit zunehmendem axialen Abstand davon in Richtung Gehäuseinneres nach Art eines Keils verjüngt ausgebildet sind.

Die Schmiermitteltaschen 33a der ersten hydrostatischen Lagerstelle 31 sind gegenüber den Schmiermitteltaschen 33b der zweiten hydrostatischen Lagerstelle 32 in Umfangsrichtung des Vorschubelementes 23 in dessen bestimmungsgemäßer Einbaulage versetzt angeordnet, so dass die schmalsten Stellen (Spitzen) der Schmiermitteltaschen 33a in axialer Richtung betrachtet auf den jeweiligen Zwischenraum zwischen zwei benachbarten Schmiermitteltaschen 33b ausgerichtet sind. Die Schmiermitteltaschen 33b werden über Bohrungen 36b in dem Gehäuse 21 mit Schmiermittel unter Druck versorgt. Die Schmiermitteltaschen 33a werden über Bohrungen 36a im Gehäuse 21 mit Schmiermittel unter Druck versorgt.

Aufgrund der Form der Schmiermitteltaschen 33a und der geometrischen Anordnung der seitlich in den Führungskanal mündenden Bohrungen 36a ist sichergestellt, dass die Schmiermitteltaschen 33a der ersten hydrostatischen Lagerstelle 31 in jeder Hublage des Vorschubelements 23 mit Schmiermittel unter Druck versorgt werden können.

Befindet sich das Vorschubelement 23 in seiner zurückgezogenen Stellung gemäß Figur 6, ist der Abstand zwischen den beiden Lagerstellen 31 und 32 maximal. In dieser Position kann das größte Drehmoment von der Linearvorschubeinrichtung aufgenommen werden. Befindet sich das Vorschubelement 23 in seiner vordersten Position gemäß Figur 7, ist der Abstand zwischen den beiden Lagerstellen 31, 32 minimal. In diesem Fall ist das Drehmoment, das von der Linearvorschubeinrichtung aufgenommen werden kann, am geringsten. Bei jeder Hublage kann der maximal mögliche Lagerabstand genutzt werden.

Die Zuleitungen zu den Bohrungen 36a, 36b sind ähnlich wie bei dem ersten Ausführungsbeispiel in dem Gehäuse 21 integrierte Bohrungen, welche das Schmiermittel unter Druck zuführen.

Das Vorschubelement 23 ist rohrartig ausgestaltet, wobei es entsprechend der Ausgestaltung des ersten Ausführungsbeispiels mit einem hydrostatischen Gewindetrieb oder einem Rollengewindetrieb oder einem Kugelgewindetrieb gekoppelt ist, welcher von einem steuerbaren Servomotor angetrieben wird, um eine hohe Vorschubkraft auf das Vorschubelement 23 ausüben und dieser entsprechend zu bewegen.

## Patentansprüche

1. Linearvorschubeinrichtung mit
- einem Gehäuse (1),
- einem darin gelagerten Vorschubelement (3), welches längs einer Vorschubachse (4) geführt vor- und zurückbewegbar- und dabei mehr oder weniger weit aus dem Gehäuse (1) ausfahrbar bzw. in das Gehäuse (1) einfahrbar ist,
- einer steuerbaren Antriebsvorrichtung (19) zur Bewegung des Vorschubelementes (3) längs der Vorschubachse (4),
- einer Lageranordnung zur Lagerung und zur Führung des Vorschubelementes (3) an dessen Außenumfang bei der Bewegung längs der Vorschubachse (4),
wobei die Lageranordnung als hydrostatisches Lager mit einer in dem Gehäuse (1) vorgesehenen, dem Außenumfang des Vorschubelementes (3) gegenüberliegenden Gegenlauffläche (2) ausgestaltet ist und wenigstens zwei in Längsrichtung des Vorschubelementes (3) hintereinander angeordnete hydrostatische Lagerstellen (11, 12) aufweist, wobei jede hydrostatische Lagerstelle (11, 12) eine Anzahl von Schmiermitteltaschen (13a, 13b) aufweist, die um den Umfang des Vorschubelementes (3) herum verteilt in der Gegenlauffläche (2) ausgebildet sind und über Schmiermittelkanäle (16), die in dem Gehäuse (1) verlaufen und in die Schmiermitteltaschen (13a, 13b) münden, mit unter Druck stehendem Schmiermittel einer Schmiermittelquelle zu versorgen sind, wobei ferner Schmiermittelrückführungen (18) zur Ableitung von Schmiermittel aus der Lageranordnung vorgesehen sind.

2. Linearvorschubeinrichtung nach Anspruch 1, wobei jede der hydrostatischen Lagerstellen (11, 12) wenigstens vier Schmiermitteltaschen (13a, 13b) aufweist.

3. Linearvorschubeinrichtung nach Anspruch 1 oder 2, wobei die Schmiermitteltaschen (13a, 13b) einer jeweiligen hydrostatischen Lagerstelle (11, 12) die gleiche Länge längs der Vorschubachse (4) aufweisen und die Abstände zwischen den Schmiermitteltaschen (13a, 13b) längs der Vorschubachse (4) gleich sind.

4. Linearvorschubeinrichtung nach einem der vorher gehenden Ansprüche, wobei die Schmiermitteltaschen (13a, 13b) einer jeweiligen hydrostatischen Lagerstelle (11, 12) auf einer jeweiligen gemeinsamen Querschnittsebene (14, 15) der Gegenlauffläche (2) zentriert liegen.

5. Linearvorschubeinrichtung nach einem der vorher gehenden Ansprüche,
wobei die Schmiermittelrückführungen nutförmige Kanäle (18) in der Gegenlauffläche (2) aufweisen.

6. Linearvorschubeinrichtung mit
- einem Gehäuse (21),
- einem stabförmigen Vorschubelement (23), das mittels einer Lageranordnung in dem Gehäuse (21) derart gelagert ist, dass es zwischen einer Stellung maximalen Rückzugs und einer Stellung maximalen Vorschubs längs einer Vorschubachse (24) axial vor- und zurückbewegbar- und dabei an einer Gehäuseöffnung (25) mehr oder weniger weit aus dem Gehäuse (21) ausfahrbar bzw. in das Gehäuse (21) einfahrbar ist,
- einer steuerbaren Antriebsvorrichtung zur Bewegung des Vorschubelementes (23) längs der Vorschubachse (24),
wobei die Lageranordnung als hydrostatisches Lager mit einer in dem Gehäuse (21) vorgesehenen, dem Außenumfang des Vorschubelementes (23) gegenüberliegenden Gegenlauffläche (22) ausgestaltet ist und eine erste hydrostatische Lagerstelle (31) mit einer Gruppe von Schmiermitteltaschen (33a) sowie eine zweite hydrostatische Lagerstelle (32) mit einer Gruppe von Schmiermitteltaschen (33b) aufweist, wobei die Schmiermitteltaschen (33a) der ersten hydrostatischen Lagerstelle (31) in dem Vorschubelement (23) an dessen Umfang verteilt und in der Nähe von dem axial hinterem Ende des Vorschubelementes (23) ausgebildet sind, wohingegen die Schmiermitteltaschen (33b) der zweiten hydrostatischen Lagerstelle (32) in der Nähe der Gehäuseöffnung (25) um den Umfang des Vorschubelementes (23) herum verteilt in der Gegenlauffläche (22) ausgebildet sind, wobei die Schmiermitteltaschen (33a, 33b) über Schmiermittelkanäle, die in dem Gehäuse (21) verlaufen und in die Schmiermitteltaschen (33a, 33b) münden, mit unter Druck stehendem Schmiermittel einer Schmiermittelquelle zu versorgen sind, wobei ferner Schmiermittelrückführungen zur Ableitung von Schmiermittel aus der Lageranordnung vorgesehen sind.

7. Linearvorschubeinrichtung nach Anspruch 6, wobei die Schmiermitteltaschen (33a) der ersten hydrostatischen Lagerstelle (31) in Draufsicht betrachtet von einer nahe dem hinteren Ende des Vorschubelementes (23) angeordneten Basis ausgehend mit zunehmendem axialen Abstand davon in Richtung zum vorderen Ende verjüngt ausgebildet sind.

8. Linearvorschubeinrichtung nach Anspruch 6 oder 7, wobei die Schmiermitteltaschen (33b) der zweiten hydrostatischen Lagerstelle (32) in Draufsicht betrachtet von einer nahe der Gehäuseöffnung (25) angeordneten Basis ausgehend mit zunehmendem axialen Abstand davon in Richtung Gehäuseinneres verjüngt ausgebildet sind.

9. Linearvorschubeinrichtung nach Anspruch 7 und/oder 8, wobei die Schmiermitteltaschen (33a, 33b) in Draufsicht betrachtet die Gestalt eines giebelhausförmigen Pentagons oder eines Dreiecks aufweisen.

10. Linearvorschubeinrichtung nach wenigstens einem der Ansprüche 7 bis 9 wobei die Schmiermitteltaschen (33a) der ersten hydrostatischen Lagerstelle (31) gegenüber den Schmiermitteltaschen (33b) der zweiten hydrostatischen Lagerstelle (32) in Umfangsrichtung des Vorschubelementes (23) versetzt angeordnet sind, so dass die schmalsten Stellen der Schmiermitteltaschen (33a) der ersten hydrostatischen Lagerstelle (31) in axialer Richtung betrachtet zwischen Schmiermitteltaschen (33b) der zweiten hydrostatischen Lagerstelle (32) weisend ausgerichtet sind.

11. Objektbearbeitungseinrichtung zum Bearbeiten von Objekten insbesondere durch Biegen oder/und Stanzen oder/und Prägen der Objekte durch einen Vorschubvorgang eines Objektbearbeitungswerkzeugs, wobei die Objektbearbeitungseinrichtung eine Linearvorschubeinrichtung nach wenigstens einem der Ansprüche 1 bis 10 aufweist und wobei das Vorschubelement der Linearvorschubeinrichtung als Objektbearbeitungswerkzeugträger ausgebildet oder zur Verbindung mit einem Objektbearbeitungswerkzeugträger eingerichtet ist.
